# FASCICULE DE BREVET EUROPEEN

(11) **EP 0 987 569 B1**
(45) Date de publication et mention de la délivrance du brevet: **27.02.2008**
(21) Numéro de dépôt: 99402285.3
(22) Date de dépôt: 17.09.1999
(51) Int. Cl.: G02B 6/02, G02B 6/036

(54) **Fibre optique monomode à dispersion décalée optimisée pour les hauts débits**
Optimierte dispersionsverschobene monomodige optische Faser für hohe Datenraten
High rate optimised monomode dispersion-shifted optical fiber

(30) Priorité: 17.09.1998 FR 9811644
(43) Date de publication de la demande: 22.03.2000
(73) Titulaire: Draka Comteq B.V., 1083 HJ Amsterdam (NL)
(72) Inventeur: Nouchi, Pascale, 78600 Maisons-Laffitte (FR); Rousseau, Jean-Claude, 78400 Chatou (FR); de Montmorillon, Louis-Anne, 75017 Paris (FR)
(74) Mandataire: Blokland, Arie

(56) Documents cités:
- EP-A- 0 724 171
- EP-A- 0 859 247
- WO-A-97/33188
- US-A- 5 483 612
- MASAO KATO, KENJI KURUKAWA, YOSHIAKI MIYAJIMA: "A new design for dispersion-shifted fiber with an effective core area larger than 100 um2 and good bending characteristics" OFC'98 TECHNICAL DIGEST, vol. 1, 22 - 27 février 1998, pages 301-302, XP002104987
- NOUCHI P ET AL: "New dispersion shifted fiber with effective area larger than 90 mu m/sup 2/" PROCEEDINGS OF THE EUROPEAN CONFERENCE ON OPTICAL COMMUNICATION, vol. 1, 15 - 19 septembre 1996, pages 49-52, XP002092143

## Description

La présente invention a pour objet une fibre optique monomode à dispersion décalée, adaptée à être utilisée dans des systèmes de transmission en multiplexage de longueur d'onde à haut débit.

Les fibres monomodes à dispersion décalée doivent présenter des caractéristiques qui correspondent aux exigences des câbliers et des systémiers : d'une part une bonne "câblabilité", autrement dit, la mise en câble de la fibre doit entraîner une très faible atténuation supplémentaire, d'autre part, une surface effective importante pour éviter les effets non linéaires, et une valeur appropriée de la longueur d'onde λ₀ de dispersion nulle.

L'utilisation de ces fibres pour des systèmes de transmission à multiplexage de longueurs d'onde, à impulsions RZ, NRZ ou du type solitons, implique encore d'autres contraintes, d'autant plus qu'augmentent le nombre de canaux émis, le débit par canal, et les puissances après amplificateur et que diminue l'espacement entre canaux. Il est préférable de disposer d'une fibre présentant une dispersion chromatique non nulle aux longueurs d'onde de transmission pour éviter les phénomènes non linéaires, et notamment le mélange à quatre ondes (Four Wave Mixing ou FWM) en présence de plusieurs canaux. On utilise donc des fibres appelées NZ-DSF (acronyme de l'anglais "non zero DSF") présentant une longueur d'onde λ₀ de dispersion chromatique nulle en dehors de la plage des canaux du multiplex pour éviter les problèmes apportés par le mélange à quatre ondes.

En outre, l'utilisation de ces fibres pour des systèmes en multiplexage de longueurs d'onde conduit à rechercher une pente de dispersion chromatique faible, de manière à conserver des caractéristiques de propagation similaires pour les différents canaux.

De nombreux profils d'indice ont été proposés pour ces fibres optiques monomodes à dispersion décalée. Le profil d'indice est généralement qualifié en fonction de l'allure de la courbe représentative de l'indice en fonction du rayon de la fibre. On représente de façon classique sur les abscisses la distance r au centre de la fibre, et sur les ordonnées l'indice, défini par sa différence par rapport à l'indice de la gaine de la fibre, en valeur relative (Δn) ou en pour cent (Δn% = 100.Δn/n).

On parle ainsi de profil d'indice en "échelon", en "trapèze" ou en "triangle" pour des courbes représentatives de la variation de l'indice en fonction du rayon qui présentent des formes respectives d'échelon, de trapèze ou de triangle.

L'article "New dispersion shifted fiber with an effective area larger than 90 µm2",Proceedings of the European Conference on Optical Communication, vol. 1, 15-19 septembre 1996, pages 49-52, décrit entre autres des profils de consigne du type à "creux central".

L'article de Nouchi P: 'Maximum effective area for non-zéro dispersion-shifted fiber' ofc '98 optical fiber communication conférence and exhibit technical digest. conférence édition, San Jose, CA, Febr. 22-27, 1998, page 303/304 304 XP002105703 optical society of America ISBN: 0-7803-4415-4
concerne la modulisation de fibre NZ-DSF présentant de forte surface effective, allant jusque 90 µm². Plurieurs type de profils y sont étudiés: piédestal, trapèze + anneau, coaxial, coaxial + anneau. Les valeurs visée de dispersion chromatique et de pente de dispersion chromatique étaient ici respectivement égaler à 4 ps/µm-km et 0,08 ps/µm²-km à la longueur d'onde de 1550 µm.

Les profils de fibre proposés dans cet article présentent une longueur d'onde d'annulation de la dispersion chromatique comprise entre 1572 et 1583 nm, avec une surface effective voisine de 90 µm². Ces deux caractéristiques permettent de satisfaire les exigences en termes d'effets non linéaires et de mélange à quatre ondes. Toutefois, ces fibres ne sont pas utilisables dans les systèmes de télécommunications à haut débit car elles présentent une dispersion chromatique à 1550 nm trop faible, en pratique inférieure en valeur absolue à 2 ps/nm.km.

Le but de la présente invention est donc de mettre au point une fibre optique à dispersion décalée optimisée pour les hauts débits, c'est-à-dire présentant une forte surface effective, de faibles pertes et une longueur d'onde d'annulation de la dispersion chromatique distincte de 1550 nm, permettant d'éviter le phénomène de mélange à quatre ondes.

La présente invention propose à cet effet une fibre optique monomode à dispersion décalée, présentant une surface effective supérieure ou égale à 60 µm², selon la revendication 1.

La fibre selon l'invention est une fibre monomode à dispersion décalée ayant une forte surface effective ainsi qu'une dispersion chromatique pour les longueurs d'onde situées dans la fenêtre de transmission autour de 1550 nm à la fois suffisamment faible pour ne pas entraîner de pertes d'informations lors de la transmission, et suffisamment forte pour éviter le phénomène de mélange à quatre ondes sur toute la fenêtre de transmission. En outre, la pente de la dispersion chromatique de la fibre selon l'invention est faible.

Avantageusement, la fibre est monomode en fibre.

Pour les systèmes à haut débit, il est aussi utile que la fibre assure une propagation monomode des canaux du multiplex. ITU-T G 650 donne une définition de la longueur d'onde de coupure en câble. La longueur d'onde de coupure théorique de la fibre est généralement supérieure de plusieurs centaines de nanomètres à la longueur d'onde de coupure en câble. Il apparaît en fait que la propagation dans une fibre optique peut être monomode, même si la longueur d'onde de coupure théorique est supérieure à la longueur d'onde des signaux utilisés : de fait, au-delà d'une distance de quelques mètres ou dizaines de mètres, qui est faible devant les distances de propagation dans les systèmes de transmission à fibre optique, les modes secondaires disparaissent du fait d'un affaiblissement trop important. La propagation dans le système de transmission est alors monomode.

En outre, les pertes par courbure de la fibre selon l'invention sont inférieures à 0,05 dB à 1550 nm pour un enroulement de 100 tours de la fibre autour d'un rayon de 30 mm.

Avantageusement, la fibre présente une dispersion chromatique comprise en valeur absolue entre 3 et 6 ps/nm.km pour une longueur d'onde de 1550 nm.

La fibre présente une pente de dispersion comprise en valeur absolue entre 0,045 et 0,09 ps/nm².km, et de préférence entre 0,045 et 0,075 ps/(nm².km) pour des longueurs d'onde de 1550 nm. Ces valeurs de la pente de dispersion chromatique assurent, dans la plage d'utilisation de la fibre, que la dispersion chromatique reste sensiblement constante. La fibre est ainsi appropriée à une utilisation en multiplexage de longueur d'onde, et présente des valeurs de dispersion chromatique sensiblement égales sur la bande du multiplex.

De préférence, l'atténuation de la fibre est inférieure ou égale à 0,23 dB/km à 1550 nm. Une telle valeur de l'atténuation assure que les pertes de transmission sont limitées.

La fibre présente un profil d'indice comprenant une partie centrale d'indice n₁ inférieur à celui nₛ de la gaine de la fibre, un anneau interne d'indice n₂ supérieur à celui de la gaine autour de ladite partie centrale, un anneau externe d'indice n₄ supérieur à celui de la gaine autour dudit anneau interne, et entre ledit anneau interne et ledit anneau externe une partie annulaire d'indice n₃ inférieur ou égal à ceux des anneaux interne et externe.

Dans ce cas, la différence Δn₁ entre l'indice de la partie centrale de la fibre et l'indice de la gaine est de préférence dans une plage de - 6,5.10⁻³ ±10%.

Le rayon a₁ de la partie centrale de la fibre est avantageusement dans une plage de 2,1 µm ± 10%.

Dans un mode de réalisation, la différence Δn₂ entre l'indice de l'anneau interne de la fibre et l'indice de la gaine est dans une plage de 12,0.10⁻³ ±10%.

On peut prévoir que le rapport a₁/a₂ entre le rayon a₁ de la partie centrale de la fibre et le rayon a₂ de l'anneau interne est dans une plage de 0,50 ± 10%.

Dans un autre mode de réalisation, la différence Δn₃ entre l'indice de la partie annulaire et l'indice de la gaine est dans une plage de - 6,5.10⁻³ ±10%.

En outre, l'épaisseur a₃ - a₂ de la partie annulaire est avantageusement dans une plage de 2,1 µm ± 10%.

De préférence, la différence Δn₄ entre l'indice de l'anneau externe et l'indice de la gaine est dans une plage de 3,5.10⁻³ ±10%.

Par ailleurs, l'épaisseur a₄ - a₃ de l'anneau externe est avantageusement dans une plage de 2,1 µm ± 10%. Une fibre présente un profil d'indice comprenant une partie centrale d'indice maximal n₁ supérieur à celui nₛ de la gaine optique, un anneau d'indice maximal n₄ supérieur à celui de la gaine optique entourant ladite partie centrale, et une zone intermédiaire d'indice n₂ inférieur à n₁ et à n₄ entre ladite partie centrale et ledit anneau.

La différence Δn₁ entre n₁ et nₛ est comprise entre 9.10⁻³ et 17.10⁻³.

La différence Δn₄ entre n₄ et nₛ est inférieure à 12.10⁻³.

D'autres caractéristiques et avantages de l'invention apparaîtront à la lecture de la description qui suit de modes de réalisation de l'invention, donnée à titre d'exemple et en référence aux figures, qui montrent:
- figure 1 une représentation schématique du profil d'indice d'une fibre selon un premier mode de réalisation de l'invention,
- figure 2 une représentation schématique du profil d'indice d'une fibre.

L'invention propose une fibre optique monomode à dispersion décalée présentant une surface effective importante, typiquement supérieure à 60 µm², voire même supérieure à 70 µm², de faibles pertes par courbure et une longueur d'onde λ₀ pour laquelle la dispersion est nulle supérieure à 1585 nm.

Avantageusement, la valeur de la longueur d'onde de coupure λ_{c} est choisie de sorte que la fibre de l'invention est monomode en théorie, ou à tout le moins monomode en fibre, i.e. suivant la définition donnée dans UIT-T G 650 du λ_{c} fibre.

Si l'on prévoit en outre que la sensibilité aux microcourbures est inférieure ou comparable à celle de la fibre commercialisée sous la référence G652 par la demanderesse, on assure une bonne câblabilité de la fibre. Ceci est d'autant plus le cas si l'atténuation provoquée par les courbures mesurées classiquement sur 100 tours d'une fibre enroulée sur une bobine de rayon 30 mm, est inférieure à 0,5 dB, comme proposé dans la recommandation UIT-T G.650, voire mieux encore de 0,05 dB.

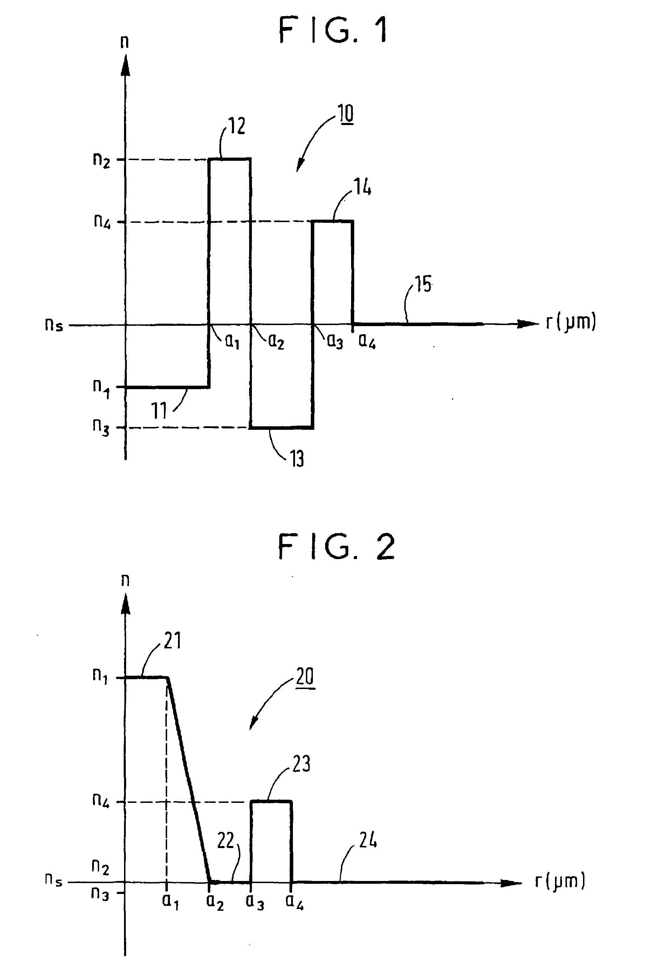

La figure 1 montre une représentation schématique d'un profil d'indice 10, qui peut être utilisé pour obtenir les caractéristiques de l'invention Le profil d'indice de la figure 1 est un profil d'indice à creux central, avec un anneau externe. Ce profil présente, en partant du centre de la fibre vers la gaine, une partie centrale 11 d'indice sensiblement constant, jusqu'à un rayon a₁. L'indice n₁ de cette partie centrale est inférieur ou égal à l'indice nₛ de la silice de la gaine représentée par la partie 15 du profil 10. Dans le mode de réalisation de la figure 1, la différence Δn₁ entre l'indice n₁ et l'indice nₛ de la gaine vaut - 6,5.10⁻³, et le rayon a₁ vaut 2,1 µm. Des valeurs d'indice Δn₁ dans une plage de ±10% autour de cette valeur sont appropriées ; la valeur du rayon a₁ peut sans problème varier de ± 10% autour de la valeur proposée.

Autour de cette partie centrale 11 d'indice inférieur à celui de la gaine 15, la fibre de l'invention présente un anneau interne 12 d'indice n₂ supérieur à celui de la gaine, entre les rayons a₁ et a₂. Dans le mode de réalisation de la figure 1, Δn₂ vaut 12.10⁻³, et l'anneau interne 12 s'étend sur une épaisseur de 2,1µm. Plus généralement, des valeurs de Δn₂ dans une plage de ±10% autour de cette valeur conviennent, et l'épaisseur de l'anneau interne 12 est de préférence telle que le rapport a₁/a₂ peut varier de ±10% par rapport à la valeur de consigne de 2,1/4,2= 0,5 proposée dans l'exemple.

La fibre présente autour de l'anneau interne 12 un anneau externe 14 d'indice n₄ supérieur à celui de la gaine 15, séparé de l'anneau interne 12 par une partie annulaire 13 d'indice n₃ inférieur ou égal à l'indice de la gaine 15. Dans le mode de réalisation de la figure 1, la partie annulaire 13 présente un indice Δn₃ de - 6,5.10⁻³, entre des rayons a₂ et a₃. Comme dans cet exemple, l'indice Δn₃ de la partie annulaire 13 dans une fibre selon l'invention est de préférence inférieur ou égal à l'indice Δn₁ de la partie centrale 11 de la fibre. Il varie avantageusement dans une plage de ±10% autour de la valeur de proposé dans l'exemple de la figure - 6,5.10⁻³. L'épaisseur a₃ - a₂ entre l'anneau interne 12 et l'anneau externe 14 est de préférence de l'ordre de 2,1 µm ; des variations dans une plage de ±5% sont acceptables.

L'anneau externe 14 présente dans l'exemple de la figure 1 un indice Δn₄ de 3,5.10⁻³; des valeurs dans une plage de ±10 % autour de cet indice conviennent. L'épaisseur a₄ - a₃ de l'anneau externe 14 est de préférence comprise dans une plage de ±10% autour de la valeur de 2,1 µm donnée dans l'exemple de la figure.

Ce choix de profil d'indice assure dans la plage des canaux d'un multiplex en longueurs d'onde, c'est-à-dire typiquement entre 1500 et 1600 nm, une forte surface effective, une faible pente de la dispersion chromatique et une dispersion chromatique permettant d'éviter le mélange à quatre ondes ; on arrive ainsi à diminuer la distance entre répéteurs d'un système de transmission utilisant comme milieu de transmission la fibre optique de l'invention, et à diminuer le problème de la compensation de dispersion chromatique.

Dans l'exemple de la figure 1, la surface effective est de 85 µm² à 1550 nm, et de 79 µm² à 1480 nm; la pente de dispersion est de 0,069 ps/nm².km, à 1550 nm. La dispersion chromatique vaut - 4,4 ps/nm.km à 1550 nm. Elle s'annule pour une valeur de 1615 nm.

L'atténuation dans la fibre est de l'ordre de 0,23 dB/km. Cette valeur permet une transmission sur des longueurs importantes, assurant typiquement une longueur de 100 km entre les répéteurs d'un système de transmission.

On arrive en outre avec le profil d'indice de la figure 1 à des pertes par courbures inférieure à 10⁻⁵ dB pour 100 tours de fibre autour d'une bobine de 30 mm de rayon, soit des valeurs de l'ordre de 10⁻⁷ dB/m, pour des longueurs d'onde autour de 1550 nm. La sensibilité aux microcourbures est inférieure de moitié à celle de la fibre G652 mentionnée plus haut, pour des longueurs d'onde autour de 1550 nm.

La fibre de la figure 1 peut être fabriquée par l'homme du métier à l'aide de techniques connues, comme le MCVD ou les autres techniques couramment utilisées pour la fabrication des fibres optiques.

Ce profil permet d'obtenir les caractéristiques indiquées dans le tableau 1.

On a porté dans le tableau 1 la longueur d'onde de coupure théorique λ_{c} en nm, la longueur d'onde λ₀ d'annulation de la dispersion chromatique en nm, la pente de dispersion à 1550 nm dC/dλ en ps/nm².km, la dispersion chromatique à 1550 nm DC en ps/nm.km, le diamètre de mode W₀₂ à 1550 nm en µm, la surface effective A_{eff} à 1550 nm en µm², la sensibilité aux courbure S_{c} (c'est-à-dire les pertes par courbure) pour 100 tours sur un rayon de 30 mm en dB, et la sensibilité aux microcourbures à 1550 nm Sµ_{c}. Cette sensibilité aux microcourbures est donnée en proportion par rapport à celle de la fibre G 652 mentionnée plus haut.

**Tableau 1**

| λc (nm) | λ₀ (nm) | dC/dλ | DC | W₀₂ | A_{eff} | S_{c} | Sµ_{c} |
|---|---|---|---|---|---|---|---|
| 1620 | 1615 | 0,069 | -4,4 | 3,83 | 85 | < 10⁻⁵ | 0,75 |

Les valeurs de ce dernier tableau montrent que le profil décrit en relation avec la figure 1 permet d'obtenir les caractéristiques de l'invention.

Le profil de la figure 1 constitue un exemple permettant de mettre en oeuvre l'invention. D'autres profils peuvent aussi permettre d'atteindre les valeurs de pente et de dispersion proposées dans l'invention.

La figure 2 montre une représentation schématique d'un profil d'indice 20. Le profil d'indice de la figure 2 est un profil d'indice de type "trapèze et anneau". Ce profil présente, en partant du centre de la fibre vers la gaine, une partie centrale 21 en forme de trapèze de petit rayon a₁ et de grand rayon a₂ L'indice maximal n₁ de cette partie centrale 21 est supérieur ou égal à l'indice nₛ de la silice de la gaine représentée par la partie 24 du profil 20.

Autour de cette partie centrale 21 d'indice n₂ supérieur à celui de la gaine 24, la fibre de l'invention présente un anneau 23 d'indice n₃ supérieur à celui de la gaine et inférieur à n₁, entre les rayons a₃ et a₄.

La fibre présente entre la partie centrale 21 et l'anneau 23 une partie annulaire 22 d'indice n₂ inférieur à n₁ et à n₃.

Le type de profil montré à la figure 2 présente les mêmes avantages que celui de la figure 1.

La fibre de la figure 2 peut être fabriquée par l'homme du métier à l'aide de techniques connues, comme le MCVD ou les autres techniques couramment utilisées pour la fabrication des fibres optiques.

On donne maintenant à titre d'exemples des paramètres possibles pour le profil de la figure 2 afin d'obtenir une fibre et les valeurs des caractéristiques obtenues.

Le tableau 2 donne des valeurs possibles des rayons et des indices pour ces profils. Les rayons sont en micromètres, et les indices (en valeur relative) en Δn. Chaque ligne du tableau correspond à un profil possible.

**Tableau 2**

| a₁(µm) | a₂ (µm) | a₃ (µm) | a₄ (µm) | 10³.Δn₁ | 10³ .Δn₃ | 10^{3.}Δn₄ |
|---|---|---|---|---|---|---|
| 0,86 | 2,87 | 5,39 | 7,18 | 12,38 | 0 | 4,95 |
| 0,94 | 3,14 | 5,50 | 7,86 | 11,24 | 0 | 3,6 |

Ces différents profils permettent d'obtenir les caractéristiques indiquées dans le tableau 3 sur les lignes correspondantes (mêmes notations que dans le tableau 1).

**Tableau 3**

| λc (nm) | λ₀(nm) | dC/dλ | DC | W₀₂ | A_{eff} | S_{c} | Sµ_{c} |
|---|---|---|---|---|---|---|---|
| 1702 | 1606 | 0,111 | -6,2 | 8,78 | 61 | 1,1.10⁻⁶ | 0,76 |
| 1707 | 1594 | 0,096 | 4,1 | 8,86 | 60,5 | 2,1.10⁻⁶ | 0,8 |

Bien entendu, la présente invention n'est pas limitée aux exemples et modes de réalisation décrits et représentés, mais elle est susceptible de nombreuses variantes accessibles à l'homme de l'art. Notamment, on pourrait obtenir les caractéristiques de l'invention avec des familles de profils autres que ceux décrite en référence au figure 1.

## Revendications

1. Fibre optique monomode à dispersion décalée, présentant une surface effective supérieure ou égale à 60 µm²_{,} un profil d'indice comprenant une partie centrale (11) d'indice n₁ inférieur à celui nₛ de la gaine (15) de la fibre, un anneau interne (12) d'indice n₂ supérieur à celui de la gaine (15) autour de ladite partie centrale (11), un anneau externe (13) d'indice n₄ supérieur à celui de la gaine (15) autour dudit anneau interne (12), et entre ledit anneau interne (12) et ledit anneau externe (14), une partie annulaire (13) d'indice n₃ inférieur à ceux desdits anneaux interne (12) et externe (14), une longueur d'onde λ₀. d'annulation de la dispersion chromatique supérieure à 1585 nm et une dispersion chromatique à 1550 nm supérieure en valeur absolue à 3 ps/nm.km **caractérisée en ce qu'**elle présente une pente de dispersion comprise en valeur absolue entre 0,045 et 0,09 ps/nm².km pour des longeurs d'onde de 1550 nm.

2. Fibre selon la revendication 1, **caractérisée en ce qu'**elle est monomode en fibre.

3. Fibre selon l'une des revendications 1 ou 2, **caractérisée en ce qu'**elle présente des pertes par courbure inférieures à 0,05 dB à 1550 nm pour un enroulement de 100 tours de la fibre autour d'un rayon de 30 mm.

4. Fibre selon l'une des revendications 1 à 3, **caractérisée en ce qu'**elle présente une dispersion chromatique comprise en valeur absolue entre 3 et 6 ps/nm.km pour une longueur d'onde de 1550 nm.

5. Fibre selon l'une des revendications 1 à 4, **caractérisée en ce qu'**elle présente une pente de dispersion comprise en valeur absolue entre 0,045 et 0,075 ps/nm².km pour des longueurs d'onde de 1550 nm.

6. Fibre selon l'une des revendications 1 à 5, **caractérisée en ce qu'**elle présente une atténuation inférieure ou égale à 0,23 dB/km à 1550 nm.

7. Fibre selon l'une des revendications 1 à 6, **caractérisée en ce que** la différence entre l'indice de la partie centrale (11) de la fibre et l'indice de la gaine (15) est dans une plage de -6, 5.10'' ± 10%.

8. Fibre selon l'une des revendications 1 à 7, **caractérisée en ce que** la rayon a₁ de la partie centrale (11) de la fibre est dans une plage de 2,1 µm ± 10%.

9. Fibre selon l'une des revendications 1 à 8, **caractérisée en ce que** la différence entre l'indice de l'anneau interne (12) de la fibre et l'indice de la gaine (15) est dans une plage de 12.10⁻³ ± 10%.

10. Fibre selon l'une des revendications 1 à 9, **caractérisée en ce que** le rapport entre le rayon de la partie centrale (11) de la fibre et le rayon de l'anneau interne (12) est dans une plage de 0,5 ± 10%.

11. Fibre selon l'une des revendications 1 à 10, **caractérisée en ce que** la différence entre l'indice de la partie annulaire (13) et l'indice de la gaine est dans une plage de -6,5.10⁻³ ± 10%.

12. Fibre selon l'une des revendications 1 à 11, **caractérisée en ce que** l'épaisseur de la partie annulaire (13) est dans une plage de 2,1 µm ±10%.

13. Fibre selon l'une des revendications 1 à 12, **caractérisée en ce que** la différence entre l'indice de l'anneau externe (14) et l'indice de la gaine (15) est dans une plage de 3 ,5,10⁻³ ± 10%.

14. Fibre selon l'une des revendications 1 à 13, **caractérisée en ce que** l'épaisseur de l'anneau externe (14) est dans une plage de 2,1 µm ±10%.

## Claims

1. Dispersion-shifted, single-mode optical fibre having an effective area greater than or equal to 60 µm², having an index profile comprising a central portion (11) having an index n₁ less than that nₛ of the cladding (15) of the fibre, an inner ring (12) having an index n₂ greater than that of the cladding (15) around said central portion (11), an outer ring (13) having an index n₄ greater than that of the cladding (15) around said inner ring (12), and between said inner ring (12) and said outer ring (14) a ring-shaped portion (13) having an index n₃ less than the indices of said inner (12) and outer (14) rings, having a zero-chromatic-dispersion wavelength λ₀ greater than 1585 nm and having a chromatic dispersion at 1550 nm greater than 3 ps/nm.km in terms of absolute value, **characterised in that** it has a dispersion slope of between 0.045 and 0.09 ps/nm².km inclusive in terms of absolute value for wavelengths of 1550 nm.

2. Fibre according to claim 1, **characterised in that** it is single-mode in fibre.

3. Fibre according to one of claims 1 or 2, **characterised in that** it has bending losses of less than 0.05 dB at 1550 nm for a winding of 100 turns of the fibre around a radius of 30 mm.

4. Fibre according to one of claims 1 to 3, **characterised in that** it has a chromatic dispersion between 3 and 6 ps/nm.km inclusive in terms of absolute value for a wavelength of 1550 nm.

5. Fibre according to one of claims 1 to 4, **characterised in that** it has a dispersion slope between 0.045 and 0.075 ps/nm².km inclusive in terms of absolute value for wavelengths of 1550 nm.

6. Fibre according to one of claims 1 to 5, **characterised in that** it has an attenuation less than or equal to 0.23 dB/km at 1550 nm.

7. Fibre according to one of claims 1 to 6, **characterised in that** the difference between the index of the central portion (11) of the fibre and the index of the cladding (15) is in a range of -6.5 x 10⁻³ ± 10 %.

8. Fibre according to one of claims 1 to 7, **characterised in that** the radius a₁ of the central portion (11) of the fibre is in a range of 2.1 µm ± 10 %.

9. Fibre according to one of claims 1 to 8, **characterised in that** the difference between the index of the inner ring (12) of the fibre and the index of the cladding (15) is in a range of 12 x 10⁻³ ± 10 %.

10. Fibre according to one of claims 1 to 9, **characterised in that** the ratio between the radius of the central portion (11) of the fibre and the radius of the inner ring (12) is in a range of 0.5 ± 10 %.

11. Fibre according to one of claims 1 to 10, **characterised in that** the difference between the index of the ring-shaped portion (13) and the index of the cladding is in a range of -6.5 x 10⁻³ ± 10 %.

12. Fibre according to one of claims 1 to 11, **characterised in that** the thickness of the ring-shaped portion (13) is in a range of 2.1 µm ± 10 %.

13. Fibre according to one of claims 1 to 12, **characterised in that** the difference between the index of the outer ring (14) and the index of the cladding (15) is in a range of 3.5 x 10⁻³± 10 %.

14. Fibre according to one of claims 1 to 13, **characterised in that** the thickness of the outer ring (14) is in a range of 2.1 µm ± 10 %.

## Patentansprüche

1. Optische Monomodefaser mit versetzter Dispersion, welche eine effektive Oberfläche größer oder gleich 60 µm², ein Indexprofil, welches einen zentralen Abschnitt (11) mit Index n₁ kleiner als derjenige nₛ der Hülle (15) der Faser, einen inneren Ring (12) um den zentralen Abschnitt (11) herum mit Index n₂ größer als derjenige der Hülle (15), einen äußeren Ring (13) um den inneren Ring (12) herum mit Index n₄ größer als derjenige der Hülle (15), und zwischen den inneren Ring (12) und dem äußeren Ring (14) einen ringförmigen Abschnitt (13) mit Index n₃ kleiner als diejenigen des inneren (12) und äußeren (14) Rings umfasst, eine Wellenlänge λ₀ der Aufhebung der chromatischen Dispersion größer als 1585 nm und eine chromatische Dispersion bei 1550 nm, deren Absolutwert größer als 3 ps/nm·km ist, aufweist, **dadurch gekennzeichnet, dass** sie eine Steigung der Dispersion aufweist, deren Absolutwert für Wellenlängen von 1550 nm zwischen 0,045 und 0,09 ps/nm2'km enthalten ist.

2. Faser gemäß Anspruch 1, **dadurch gekennzeichnet, dass** sie in der Faser monomodig ist.

3. Faser gemäß einem der Ansprüche 1 oder 2, **dadurch gekennzeichnet, dass** sie Verluste durch Krümmung kleiner als 0,05 dB bei 1550 nm für ein Aufrollen von 100 Windungen der Faser um einen Radius von 30 mm aufweist.

4. Faser gemäß einem der Ansprüche 1-3, **dadurch gekennzeichnet, dass** sie eine chromatische Dispersion aufweist, deren Absolutwert für eine Wellenlänge von 1550 nm zwischen 3 und 6 ps/nm·km enthalten ist.

5. Faser gemäß einem der Ansprüche 1-4, **dadurch gekennzeichnet, dass** sie eine Steigung der Dispersion aufweist, deren Absolutwert für Wellenlängen von 1550 nm zwischen 0,045 und 0,075 ps/nm²·km enthalten ist.

6. Faser gemäß einem der Ansprüche 1-5, **dadurch gekennzeichnet, dass** sie bei 1550 nm eine Dämpfung kleiner oder gleich 0,23 dB/km aufweist.

7. Faser gemäß einem der Ansprüche 1-6, **dadurch gekennzeichnet, dass** die Differenz zwischen dem Index des zentralen Abschnitts (11) der Faser und dem Index der Hülle (15) in einem Bereich von -6, 5·10⁻³ ± 10% ist.

8. Faser gemäß einem der Ansprüche 1-7, **dadurch gekennzeichnet, dass** der Radius a₁ des zentralen Abschnitts (11) der Faser in einem Bereich von 2,1 µm ± 10% ist.

9. Faser gemäß einem der Ansprüche 1-8, **dadurch gekennzeichnet, dass** die Differenz zwischen dem Index des inneren Rings (12) der Faser und dem Index der Hülle (15) in einem Bereich von 12·10⁻³ ± 10% ist.

10. Faser gemäß einem der Ansprüche 1-9, **dadurch gekennzeichnet, dass** das Verhältnis zwischen dem Radius des zentralen Abschnitts (11) der Faser und dem Radius des inneren Rings (12) in einem Bereich von 0,5 ± 10% ist.

11. Faser gemäß einem der Ansprüche 1-10, **dadurch gekennzeichnet, dass** die Differenz zwischen dem Index des ringförmigen Abschnitts (13) und dem Index der Hülle in einem Bereich von -6,5·10⁻³ ± 10% ist.

12. Faser gemäß einem der Ansprüche 1-11, **dadurch gekennzeichnet, dass** die Dicke des ringförmigen Abschnitts (13) in einem Bereich von 2,1 µm ± 10% ist.

13. Faser gemäß einem der Ansprüche 1-12, **dadurch gekennzeichnet, dass** die Differenz zwischen dem Index des äußeren Rings (14) und dem Index der Hülle (15) in einem Bereich von 3, 5 **·** 10⁻⁵ ± 10% ist.

14. Faser gemäß einem der Ansprüche 1-13, **dadurch gekennzeichnet, dass** die Dicke des äußeren Rings (14) in einem Bereich von 2,1 µm ± 10% ist.
